# EUROPEAN PATENT APPLICATION

(11) **EP 4 287 160 A1**
(43) Date of publication of application: **06.12.2023**
(21) Application number: 21930167.8
(22) Date of filing: 11.03.2021
(51) Int. Cl.: G08G 1/16

(54) **IMAGE ANALYSIS DEVICE, IMAGE ANALYSIS METHOD, AND COMPUTER-READABLE MEDIUM HAVING PROGRAM STORED THEREIN**

(71) Applicant: NEC Corporation, 108-8001 Tokyo (JP)
(72) Inventor: SASAYAMA Konomi, Tokyo 108-8001 (JP)
(74) Representative: Vossius & Partner Patentanwälte Rechtsanwälte mbB
(86) International application number: PCT/JP2021/009824
(87) International publication number: WO 2022/190314

(57) **Abstract**

An image analysis apparatus (10) according to the present disclosure includes: an area division unit (11) that performs area division on an image obtained by capturing a road surface, and generates a result of the area division in which the image is classified into image areas of a plurality of categories; a depth estimation unit (12) that performs depth estimation on the image and generates depth estimation information; and a detection unit (13) that detects irregularities present on the road surface based on the result of the area division and the depth estimation information. The plurality of categories include a road category, and the detection unit (13) detects irregularities present on the road surface within the image area classified in the road category.

## Description

### Technical Field

The present disclosure relates to an image analysis apparatus, an image analysis method, and a computer readable medium storing a program.

### Background Art

Patent Literature 1 discloses an apparatus that monitors surroundings of a vehicle using a vehicle-mounted camera. This surrounding monitoring apparatus for vehicles, based on images captured by a CCD camera built into the left door mirror of the vehicle, detects edges in the direction parallel to a road, and excludes edges corresponding to the paint display drawn on the road from among a plurality of the detected edges and then extracts edges of a three-dimensional obstacle. When a distance between the extracted edge of the three-dimensional obstacle and the vehicle is less than a predetermined distance, a notification that there is a possibility of the vehicle coming into contact with the three-dimensional obstacle is sent to a driver by using a display or speaker.

### Citation List

### Patent Literature

Patent Literature 1: Japanese Unexamined Patent Application Publication No. 2020-112977

### Summary of Invention

### Technical Problem

Many people feel uneasy about driving on narrow roads having curbs and gutters on the left and right sides thereof. When a driver pulls over to the side edge of a narrow road in order to pass a vehicle coming from the opposite direction, there is a risk that the wheels may come into contact with the curb or fall into the gutter due to careless driving.

An object of the present disclosure is to provide an image analysis apparatus, an image analysis method, and a computer readable medium storing a program which are capable of selectively detecting irregularities present on a road surface.

### Solution to Problem

An image analysis apparatus according to an example aspect includes: area division means for performing area division on an image obtained by capturing a road surface, and generating a result of the area division in which the image is classified into image areas of a plurality of categories; depth estimation means for performing depth estimation on the image and generating depth estimation information; and detection means for detecting irregularities present on the road surface based on the result of the area division and the depth estimation information.

An image analysis method according to an example aspect includes: performing area division on an image obtained by capturing a road surface, and generating a result of the area division in which the image is classified into image areas of a plurality of categories; performing depth estimation on the image and generating depth estimation information; and detecting irregularities present on the road surface based on the result of the area division and the depth estimation information.

A computer readable medium according to an example aspect stores a program for causing a computer to execute: a process of performing area division on an image obtained by capturing a road surface, and generating a result of the area division in which the image is classified into image areas of a plurality of categories; a process of performing depth estimation on the image and generating depth estimation information; and a process of detecting irregularities present on the road surface based on the result of the area division and the depth estimation information.

### Advantageous Effects of Invention

According to the above-described example aspects, it is possible to provide an image analysis apparatus, an image analysis method, and a computer readable medium storing a program which are capable of selectively detecting irregularities present on a road surface.

### Brief Description of Drawings

Fig. 1 is a block diagram showing a configuration of an image analysis apparatus according to an example embodiment;
Fig. 2 is a diagram showing an example of an image obtained by capturing a surrounding road surface;
Fig. 3 is a diagram showing a result of area division generated from the image shown in Fig. 2;
Fig. 4 is a diagram showing depth estimation information generated from the image shown in Fig. 2;
Fig. 5 is a diagram showing a result of detection obtained by superimposing the result of area division and the depth estimation information;
Fig. 6 is a flowchart showing an image analysis method according to the example embodiment; and
Fig. 7 is a block diagram showing a hardware configuration of a computer that implements the image analysis apparatus according to the example embodiment.

### Example Embodiment

An example embodiment of the present disclosure will be described hereinafter with reference to the drawings. Note that, for the clarification of the description, the following descriptions and the drawings are partially omitted and simplified as appropriate. Further, the same elements are denoted by the same reference symbols throughout the drawings, and redundant descriptions are omitted as necessary. Further, specific numerical values and the like stated in the following example embodiment are merely examples for facilitating understanding of the present disclosure, and are not limited thereto.

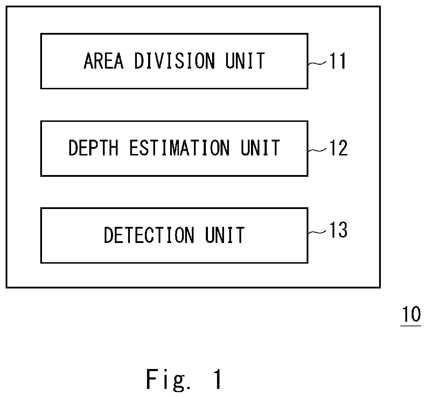

The example embodiment relates to, for example, a technique used during driving of a vehicle to detect irregularities on a road surface near the vehicle. Fig. 1 is a block diagram showing a configuration of an image analysis apparatus 10 according to the example embodiment. The image analysis apparatus 10 is mounted on a vehicle as one of vehicle-mounted safety apparatuses.

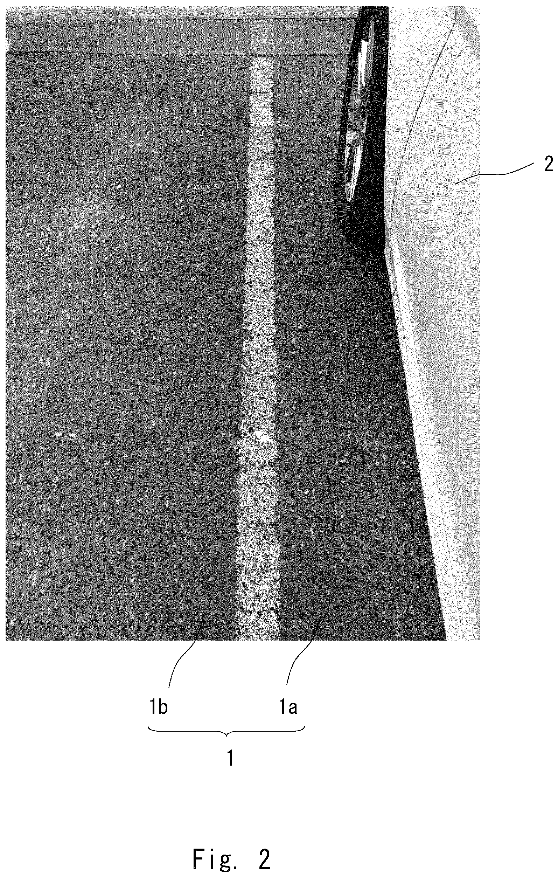

The vehicle includes a plurality of cameras mounted thereon. For example, the camera can be mounted on the left side of the vehicle body. The camera can capture an image of the area near the front left wheel of the vehicle, which is a blind spot for a driver. Fig. 2 is a diagram showing an example of an image obtained by capturing a road surface near the vehicle. In Fig. 2, the captured image shows a part of a road 1 and the left side of the vehicle body of a vehicle 2. In this example, the road 1 is divided by a white line into a roadway 1a where the vehicle 2 travels and a road shoulder 1b.

As shown in Fig. 1, the image analysis apparatus 10 includes an area division unit 11, a depth estimation unit 12, and a detection unit 13. The area division unit 11 performs area division (also referred to as area recognition or segmentation) on the above-described image obtained by capturing a surrounding road surface, and generates a result of area division in which the image is classified into image areas of a plurality of categories. As an area division technique, for example, Semantic Segmentation using Fully Convolutional Network (FCN) can be used.

In Semantic Segmentation, an input image is classified (inferred) on a pixel-by-pixel basis and a category for each classified pixel is labeled, to thereby divide the image into image areas of a plurality of categories and output them as a result of the area division. The result of the area division is, for example, an image in which divided image areas are shown in different colors.

Note that the vehicle-mounted camera, for example, may capture an image of a travelling state of the vehicle in real time at a predetermined frame rate, and input the captured image to the image analysis apparatus 10. The image analysis apparatus 10 can acquire the image input at a predetermined frame rate, classify the object included in the image, and output the classified image as a result of the area division at a predetermined frame rate.

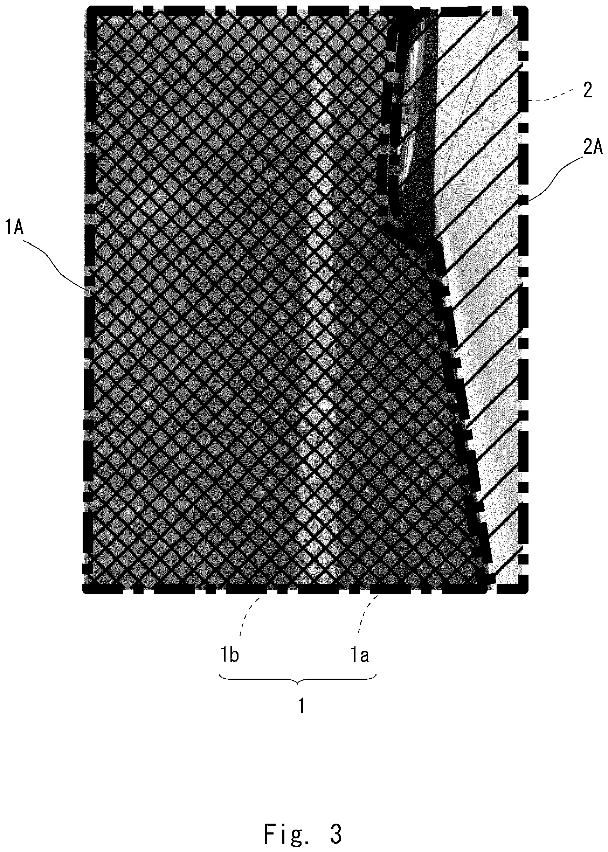

Fig. 3 is a diagram showing a result of area division generated from the image shown in Fig. 2. For the purpose of description, in Fig. 3, the result of the area division is superimposed on the captured image. Further, in Fig. 3, alternate long and short dashed lines surrounding each of a plurality of image areas are added in order to clearly show each image area. A plurality of categories include a road category. In the example of Fig. 3, the input image is divided into two image areas of the road category, a road area 1A (a shaded area having a check pattern) and a vehicle area 2A (a shaded area having shaded lines).

The depth estimation unit 12 performs depth estimation on an input image and generates depth estimation information. The depth estimation unit 12, for example, estimates the depth of each pixel by analyzing the captured image by using a model based on a depth estimation algorithm using a convolutional neural network. The depth estimation algorithm is, for example, CNN-Depth. The depth estimation information indicates the corresponding relation between the position coordinates and the depth for each pixel of the captured image.

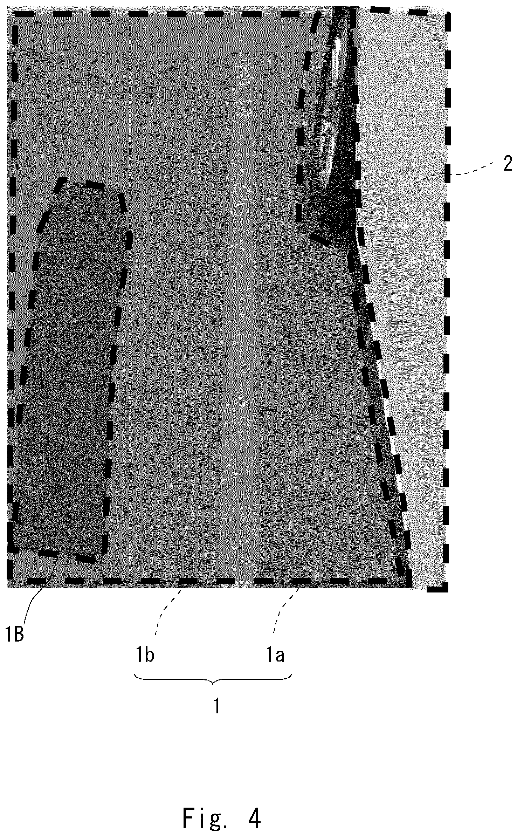

Fig. 4 is a diagram showing depth estimation information generated from the image shown in Fig. 2. Fig. 4 is a depth map visualizing the estimated depth information, in which the higher (deeper) depth areas are indicated in darker colors and the lower (shallower) depth areas are indicated in lighter colors. For the purpose of description, in Fig. 3, the depth estimation information is superimposed on the captured image. Further, in Fig. 3, a broken line surrounding an area of pixels having the same depth is added. As shown in Fig. 3, it can be seen that there is a high depth area 1B within the road shoulder 1b. In this way, a boundary on the depth map is generated in an area where gutters, curbs that define the boundary between the road and the sidewalk, or the like are present.

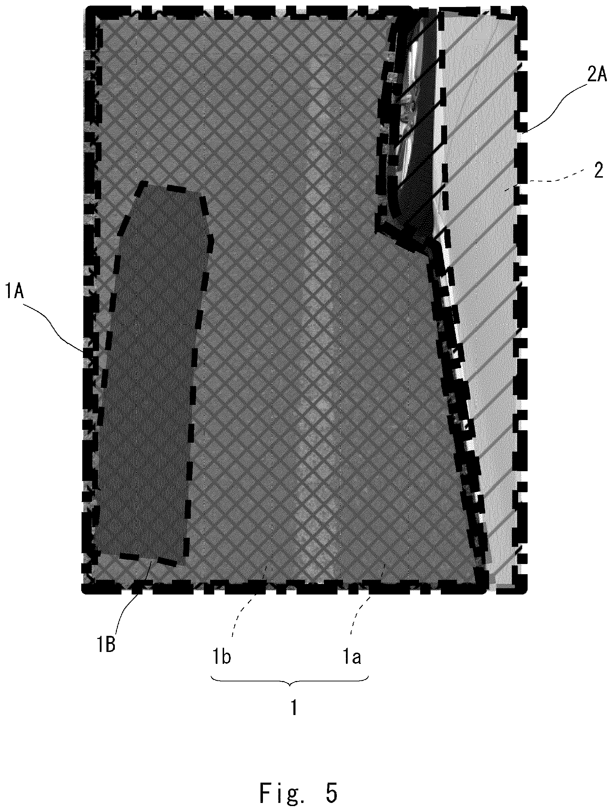

The detection unit 13 detects irregularities present on a road surface based on a result of area division and depth estimation information. Fig. 5 is a diagram showing a result of detection obtained by superimposing the result of area division and the depth estimation information. For the purpose of description, in Fig. 3, the result of area division and the depth estimation information are superimposed on the captured image. The detection unit 13 detects the high depth area 1B in the road area 1A shown in Fig. 5.

As described above, by using a result of area division and depth estimation information, it is possible to detect irregularities for each image area divided into categories. Thus, for example, when a driver drives on a narrow road having gutters on the left and right sides thereof, it is possible to recognize irregularities present on the road surface and to prevent the wheels from falling into the gutters or coming into contact with the curbs. By analyzing images captured by a plurality of cameras with the image analysis apparatus 10, it is possible to recognize irregularities on the road surface near the vehicle and thus to drive the vehicle more safely.

It is preferable that the detection unit 13 selectively detect irregularities present on the road surface in the road area 1A among a plurality of divided categories. By doing so, it is possible to selectively detect irregularities on the road where the vehicle 2 is expected to enter and to alert a driver appropriately.

Note that, in the above-described example, although the depth estimation unit 12 performs depth estimation on the entire captured image, the present disclosure is not limited thereto. The depth estimation unit 12 may perform depth estimation only on at least one (e.g., the road area 1A) of the image areas divided by the area division unit 11.

Further, grooves or steps on the road surface may not interfere with vehicle traffic depending on their heights (depths). Therefore, the detection unit 13 can detect only areas where the estimated depth falls outside a predetermined threshold range as irregularities present on the road surface. That is, it is possible to appropriately detect deep grooves in which the tires of the vehicle may get stuck or steps having a height the vehicle cannot pass over. Note that, the size, i.e., the width or the length, of the groove or the like may be calculated based on the depth estimation information, and irregularities on the road surface may be detected using the calculated size.

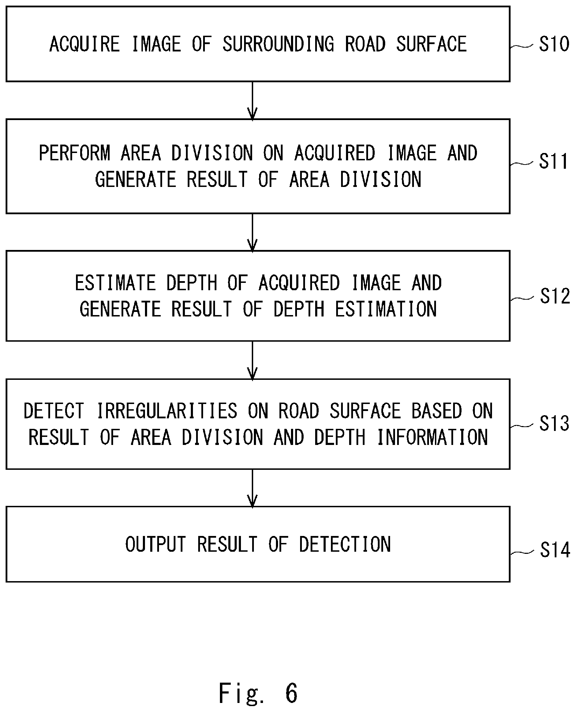

A process of detecting irregularities on a road surface performed by the image analysis apparatus 10 will be described below with reference to Fig. 6. Fig. 6 is a flowchart showing an image analysis method according to the example embodiment. As shown in Fig. 6, first, the image analysis apparatus 10 acquires an image (Fig. 2) of the surrounding road surface captured by a camera mounted on a vehicle (Step S10).

Next, the area division unit 11 performs area division on the image acquired in S10 and generates a result of the area division (Step S11). Then, the depth estimation unit 12 estimates the depth of the image acquired in S10 and generates depth estimation information (Step S12). Note that one of the process of area division and the process of depth estimation may be performed first, or these processes may be performed simultaneously.

Then, the detection unit 13 detects irregularities present on the road surface based on the result of the area division and the depth estimation information (Step S13), and outputs a result of the detection (Step S14). The result of the detection can be displayed, for example, on a display apparatus in the vehicle. Further, for example, when a distance between the detected irregularities on the road surface and the vehicle is less than a predetermined value, a warning sound may be output so as to inform a driver of the danger.

Further, it is possible to generate a steering intervention instruction for intervening in the steering wheel operation so as to move the vehicle away from the detected irregularities on the road surface. By doing so, it is possible to forcibly avoid the wheels from falling into the gutter.

Further, a function of sending a notification that irregularities are present on the road surface to other vehicles may be included. When a notification about the result of detection is sent to other vehicles, it may be sent using vehicle-to-vehicle communication (also referred to as V2V communication). Further, a notification about the result of detection may be sent to other vehicles using vehicle-to-infrastructure communication (also referred to as V2I communication) through road infrastructure such as communication devices installed in traffic signals.

Examples of the timings at which the processes shown in Fig. 6 are started are as follows. First, when the image analysis apparatus 10 is a vehicle-mounted apparatus, the process of detecting irregularities can be started when a predetermined condition regarding a driving state of the vehicle is satisfied. Predetermined conditions regarding driving of a vehicle include pressing of a processing start button by a driver or a passenger. Further, position information of the vehicle is acquired using a Global Positioning System (GPS) mounted on the vehicle, and the aforementioned process can be started, for example, when the vehicle enters a narrow alley.

The predetermined conditions regarding driving of a vehicle may also include the lane in which the vehicle is traveling. That is, the process of detecting irregularities on the road surface can be started in accordance with the lane in which the vehicle is traveling. It is possible to determine the lane in which the vehicle is traveling based on map information and position information such as GPS and GNSS. It is also possible to detect a road dividing line (a white, yellow, or other colored line formed on the road surface) from the captured image and then determine the lane in which the vehicle is traveling based on a result of the detection.

As a method for detecting a road dividing line from the captured image, known methods can be employed, such as those based on edges of the paint display drawn on the road surface included in the image and those using machine learning. Further, when the categories of which the area is divided by the area division unit 11 include the category of white lines on the road surface, the result may be used to detect a road dividing line.

For example, when the lane in which a vehicle is traveling is the lane at the edge of the road, the process of detecting irregularities on the road surface can be started. By doing so, it is possible to appropriately detect dangers such as curbs and gutters on the road shoulder when a driver moves the vehicle to the edge lane due to a lane change, when the number of lanes is reduced and the lane in which the vehicle is traveling becomes the edge lane, or when a driver moves the vehicle to a single-lane road by turning right, left, and so on.

Further, when a vehicle includes a ranging function such as a millimeter-wave radar, a laser radar, and a stereo camera mounted thereon, the above process can be started when a distance between the vehicle and the roadside sidewall becomes less than a predetermined value.

Note that each functional block for performing various types of processes described in the drawing can be composed of a processor, a memory, and other circuits in terms of hardware. Further, it is possible to implement the above-described processes by causing a processor to execute a program. Therefore, these functional blocks can be implemented in various forms by hardware only, software only, or a combination thereof, and are not limited to any of them.

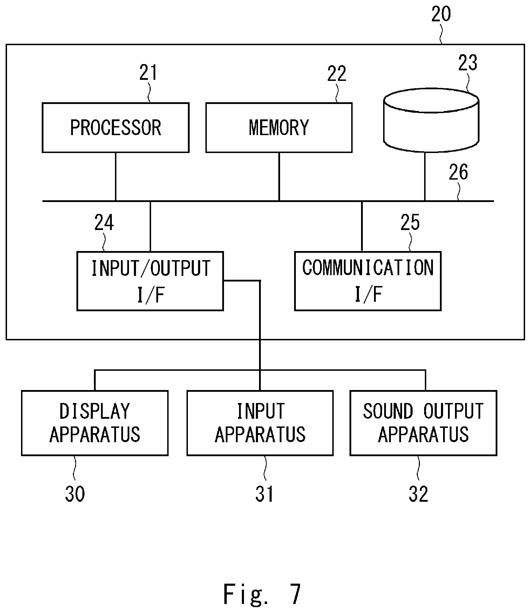

Next, a hardware configuration of the image analysis apparatus 10 according to the example embodiment will be described. Fig. 7 is a block diagram showing a hardware configuration of a computer 20 that implements the image analysis apparatus 10. However, the configuration shown in Fig. 7 is not intended to limit the configuration of the image analysis apparatus 10.

As shown in Fig. 7, the computer 20 includes a processor 21, a memory 22, a storage 23, an input/output interface (an input/output I/F) 24, a communication interface (a communication I/F) 25, and the like, and they are connected to one another through a bus 26.

The processor 21 is, for example, an arithmetic processing unit such as a Central Processing Unit (CPU) or a Graphics Processing Unit (GPU). The memory 22 is, for example, a memory such as a Random Access Memory (RAM) or a Read Only Memory (ROM). The storage 23 is, for example, a storage device such as a Hard Disk Drive (HDD), a Solid State Drive (SSD), or a memory card.

The storage 23 stores programs for implementing the functions of the components included in the image analysis apparatus 10. The processor 21 implements the function of each of the components included in the image analysis apparatus 10 by executing the respective programs. Note that when the processor 21 executes the above programs, it may execute the programs after loading them onto the memory 22 or may execute the programs without loading them onto the memory 22. Further, the memory 22 and the storage 23 also serve to store information and data held by the components included in the image analysis apparatus 10.

The above-described program(s) can be stored and provided to a computer using any type of non-transitory computer readable media. Non-transitory computer readable media include any type of tangible storage media. Examples of non-transitory computer readable media include magnetic storage media (e.g., floppy disks, magnetic tapes, and hard disk drives), optical magnetic storage media (e.g., magneto-optical disks), CD-Read Only Memory (ROM), CD-R, CD-R/W, semiconductor memories (e.g., mask ROM, Programmable ROM (PROM), Erasable PROM (EPROM), flash ROM, and Random Access Memory (RAM)). Further, the program(s) may be provided to a computer using any type of transitory computer readable media. Examples of transitory computer readable media include electric signals, optical signals, and electromagnetic waves. Transitory computer readable media can provide the program(s) to a computer via a wired communication line (e.g., electric wires and optical fibers) or a wireless communication line.

The input/output interface 24 is connected to a display apparatus 30, an input apparatus 31, a sound output apparatus 32, and the like. The display apparatus 30 is a Liquid Crystal Display (LCD) or the like, and displays an image corresponding to an image obtained by capturing the road surface, and a result of area division and depth estimation information processed by the processor 21. The display apparatus 30 can, for example, display a warning for informing a driver of the danger when a distance between the irregularities on the road surface obtained based on a result of area division and depth estimation information and the vehicle is less than a predetermined value.

The input apparatus 31 is an apparatus that receives an operation input from a driver, and is, for example, a touch sensor. The display apparatus 30 and the input apparatus 31 may be integrated with each other and implemented as a touch panel. The sound output apparatus 32 outputs sounds corresponding to acoustic data processed by the processor 21. The sound output apparatus 32 can, for example, output a warning sound so as to inform a driver of the danger when a distance between the irregularities on the road surface obtained based on a result of area division and depth estimation information and the vehicle is less than a predetermined value.

The communication interface 25 transmits and receives data to and from an external apparatus, for example, through a radio communication line. For example, road condition information, such as the width of the road and whether gutters are present, can be acquired from the outside through the communication I/F 25. The image analysis apparatus 10 may start the process of detecting irregularities on the road surface in accordance with the road condition information.

Note that, as another form, the image analysis apparatus 10 can be implemented as a server installed in a data center or the like. The image data captured by the camera mounted on the vehicle is transmitted to the server and then the process of detecting irregularities on the road surface is executed. Further, a result of the detection from the server is received by the communication I/F mounted on the vehicle, and the displaying of a warning, the outputting of a warning sound, and the like can be performed.

Although the present disclosure has been described with reference to the example embodiment, the present disclosure is not limited to the above-described example embodiment. Various changes that may be understood by those skilled in the art may be made to the configurations and details of the present disclosure within the scope of the disclosure.

Further, the whole or part of the example embodiment disclosed above can be described as, but not limited to, the following supplementary notes.

### (Supplementary note 1)

An image analysis apparatus comprising:
area division means for performing area division on an image obtained by capturing a road surface, and generating a result of the area division in which the image is classified into image areas of a plurality of categories;
depth estimation means for performing depth estimation on the image and generating depth estimation information; and
detection means for detecting irregularities present on the road surface based on the result of the area division and the depth estimation information.

### (Supplementary note 2)

The image analysis apparatus according to supplementary note 1, wherein
the plurality of categories include a road category, and
the detection means detects irregularities present on the road surface within the image area classified in the road category.

### (Supplementary note 3)

The image analysis apparatus according to supplementary note 1 or 2, wherein the detection means detects an area where the estimated depth falls outside a predetermined threshold range as irregularities present on the road surface.

### (Supplementary note 4)

The image analysis apparatus according to any one of supplementary notes 1 to 3, wherein
the image analysis apparatus is an apparatus mounted on a vehicle, and
the detection means starts a process of detecting the irregularities when a predetermined condition regarding driving of a vehicle is satisfied.

### (Supplementary note 5)

The image analysis apparatus according to supplementary note 4, wherein the detection means starts the process of detecting the irregularities when a lane in which the vehicle travels is the predetermined condition.

### (Supplementary note 6)

The image analysis apparatus according to supplementary note 5, wherein the detection means specifies the lane in which the vehicle travels based on a dividing line included in the image.

### (Supplementary note 7)

An image analysis method comprising:
performing area division on an image obtained by capturing a road surface, and generating a result of the area division in which the image is classified into image areas of a plurality of categories;
performing depth estimation on the image and generating depth estimation information; and
detecting irregularities present on the road surface based on the result of the area division and the depth estimation information.

### (Supplementary note 8)

The image analysis method according to supplementary note 7, wherein
the plurality of categories include a road category, and
irregularities present on the road surface within the image area classified in the road category are detected.

### (Supplementary note 9)

The image analysis method according to supplementary note 7 or 8, wherein an area where the estimated depth falls outside a predetermined threshold range is detected as irregularities present on the road surface.

### (Supplementary note 10)

The image analysis method according to any one of supplementary notes 7 to 9, wherein
the image analysis method is used during driving of a vehicle, and
a process of detecting the irregularities is started when a predetermined condition regarding driving of a vehicle is satisfied.

### (Supplementary note 11)

The image analysis method according to supplementary note 10, wherein the process of detecting the irregularities is started when a lane in which the vehicle travels is the predetermined condition.

### (Supplementary note 12)

The image analysis method according to supplementary note 11, wherein the lane in which the vehicle travels is specified based on a dividing line included in the image.

### (Supplementary note 13)

A computer readable medium storing a program for causing a computer to execute:
a process of performing area division on an image obtained by capturing a road surface, and generating a result of the area division in which the image is classified into image areas of a plurality of categories;
a process of performing depth estimation on the image and generating depth estimation information; and
a process of detecting irregularities present on the road surface based on the result of the area division and the depth estimation information.

### (Supplementary note 14)

The computer readable medium according to supplementary note 13, wherein
the plurality of categories include a road category, and
in the process of detecting irregularities, irregularities present on the road surface within the image area classified in the road category are detected.

### (Supplementary note 15)

The computer readable medium according to supplementary note 13 or 14, wherein in the process of detecting irregularities, an area where the estimated depth falls outside a predetermined threshold range is detected as irregularities present on the road surface.

### (Supplementary note 16)

The computer readable medium according to any one of supplementary notes 13 to 15, wherein
the program is executed during driving of a vehicle, and
the process of detecting irregularities is started when a predetermined condition regarding driving of a vehicle is satisfied.

### (Supplementary note 17)

The computer readable medium according to supplementary note 16, wherein the process of detecting irregularities is started when a lane in which the vehicle travels is the predetermined condition.

### (Supplementary note 18)

The computer readable medium according to supplementary note 17, wherein the lane in which the vehicle travels is specified based on a dividing line included in the image.

### Reference Signs List

- 1: ROAD
- 1a: ROADWAY
- 1b: ROAD SHOULDER
- 1A: ROAD AREA
- 1B: HIGH DEPTH AREA
- 2: VEHICLE
- 2A: VEHICLE AREA
- 10: IMAGE ANALYSIS APPARATUS
- 11: AREA DIVISION UNIT
- 12: DEPTH ESTIMATION UNIT
- 13: DETECTION UNIT
- 20: COMPUTER
- 21: PROCESSOR
- 22: MEMORY
- 23: STORAGE
- 24: INPUT/OUTPUT I/F
- 25: COMMUNICATION I/F
- 26: BUS
- 30: DISPLAY APPARATUS
- 31: INPUT APPARATUS
- 32: SOUND OUTPUT APPARATUS

## Claims

1. An image analysis apparatus comprising:
area division means for performing area division on an image obtained by capturing a road surface, and generating a result of the area division in which the image is classified into image areas of a plurality of categories;
depth estimation means for performing depth estimation on the image and generating depth estimation information; and
detection means for detecting irregularities present on the road surface based on the result of the area division and the depth estimation information.

2. The image analysis apparatus according to claim 1, wherein
the plurality of categories include a road category, and
the detection means detects irregularities present on the road surface within the image area classified in the road category.

3. The image analysis apparatus according to claim 1 or 2, wherein the detection means detects an area where the estimated depth falls outside a predetermined threshold range as irregularities present on the road surface.

4. The image analysis apparatus according to any one of claims 1 to 3, wherein
the image analysis apparatus is an apparatus mounted on a vehicle, and
the detection means starts a process of detecting the irregularities when a predetermined condition regarding driving of a vehicle is satisfied.

5. The image analysis apparatus according to claim 4, wherein the detection means starts the process of detecting the irregularities when a lane in which the vehicle travels is the predetermined condition.

6. The image analysis apparatus according to claim 5, wherein the detection means specifies the lane in which the vehicle travels based on a dividing line included in the image.

7. An image analysis method comprising:
performing area division on an image obtained by capturing a road surface, and generating a result of the area division in which the image is classified into image areas of a plurality of categories;
performing depth estimation on the image and generating depth estimation information; and
detecting irregularities present on the road surface based on the result of the area division and the depth estimation information.

8. The image analysis method according to claim 7, wherein
the plurality of categories include a road category, and
irregularities present on the road surface within the image area classified in the road category are detected.

9. The image analysis method according to claim 7 or 8, wherein an area where the estimated depth falls outside a predetermined threshold range is detected as irregularities present on the road surface.

10. The image analysis method according to any one of claims 7 to 9, wherein
the image analysis method is used during driving of a vehicle, and
a process of detecting the irregularities is started when a predetermined condition regarding driving of a vehicle is satisfied.

11. The image analysis method according to claim 10, wherein the process of detecting the irregularities is started when a lane in which the vehicle travels is the predetermined condition.

12. The image analysis method according to claim 11, wherein the lane in which the vehicle travels is specified based on a dividing line included in the image.

13. A computer readable medium storing a program for causing a computer to execute:
a process of performing area division on an image obtained by capturing a road surface, and generating a result of the area division in which the image is classified into image areas of a plurality of categories;
a process of performing depth estimation on the image and generating depth estimation information; and
a process of detecting irregularities present on the road surface based on the result of the area division and the depth estimation information.

14. The computer readable medium according to claim 13, wherein
the plurality of categories include a road category, and
in the process of detecting irregularities, irregularities present on the road surface within the image area classified in the road category are detected.

15. The computer readable medium according to claim 13 or 14, wherein in the process of detecting irregularities, an area where the estimated depth falls outside a predetermined threshold range is detected as irregularities present on the road surface.

16. The computer readable medium according to any one of claims 13 to 15, wherein
the program is executed during driving of a vehicle, and
the process of detecting irregularities is started when a predetermined condition regarding driving of a vehicle is satisfied.

17. The computer readable medium according to claim 16, wherein the process of detecting irregularities is started when a lane in which the vehicle travels is the predetermined condition.

18. The computer readable medium according to claim 17, wherein the lane in which the vehicle travels is specified based on a dividing line included in the image.
